Europäisches Patentamt

European Patent Office

Office européen des brevets

(19)

(11) Veröffentlichungsnummer: **0 212 664**
**B1**

(12) **EUROPÄISCHE PATENTSCHRIFT**

(45) Veröffentlichungstag der Patentschrift:
**12.04.89**

(21) Anmeldenummer: **86111859.4**

(22) Anmeldetag: **27.08.86**

(51) Int. Cl.⁴: **B 60 T 7/10**

(54) Abdeckelement für einen Handbremshebel eines Kraftfahrzeuges.

(30) Priorität: **30.08.85 DE 3531056**
**12.02.86 DE 3604297**

(43) Veröffentlichungstag der Anmeldung:
**04.03.87 Patentblatt 87/10**

(45) Bekanntmachung des Hinweises auf die Patenterteilung:
**12.04.89 Patentblatt 89/15**

(84) Benannte Vertragsstaaten:
**DE FR GB SE**

(56) Entgegenhaltungen:
**GB-A- 2 079 903**

(73) Patentinhaber: **AUDI AG, Postfach 220,**
**D-8070 Ingolstadt (DE)**

(72) Erfinder: **Pflugfelder, Karl, Waiblinger Weg 29,**
**D-7107 Neckarsulm (DE)**
Erfinder: **Heitele, Rolf, Berliner Strasse 14,**
**D-7107 Neckarsulm (DE)**
Erfinder: **Leilich, Martin, Kirchstrasse 33,**
**D-7122 Besigheim (DE)**

(74) Vertreter: **Speidel, Eberhardt,**
**Postfach 1320 Waldpromenade 26, D-8035 Gauting (DE)**

## Beschreibung

Die Erfindung bezieht sich auf ein Abdeckelement für den schwenkbaren Handbremshebel eines Kraftfahrzeuges, der sich durch einen Schlitz in einer am Fahrzeugboden angebrachten Konsole erstreckt und auf einem unterhalb oder hinter der Konsolenoberfläche angeordneten Drehzapfen gelagert ist.

Um das Eindringen von Schmutz und Staub in den Schlitz zu verhindern, ist es bekannt, von beiden Seitenkanten des Schlitzes aufeinander gerichtete Borsten vorzusehen, zwischen deren Enden sich der Handbremshebel verschwenken läßt. Diese Borsten sind jedoch ebenfalls Schmutz- und Staubfänger, verteuern die Konsole, nutzen sich im Laufe der Zeit ab und sind allgemein ästhetisch wenig befriedigend.

Der Erfindung liegt die Aufgabe zugrunde, ein Abdeckelement für den schwenkbaren Handbremshebel zu schaffen, das den Handbremshebel in gelöstem Zustand mehr oder weniger verschwinden läßt, praktisch keiner Abnützung unterworfen ist, selbst keinen Staubfänger darstellt und außerdem mit geringerem Aufwand als die vorstehend erwähnten Borsten hergestellt und montiert werden kann.

Diese Aufgabe wird erfindungsgemäß durch die im Kennzeichen des Anspruchs 1 angegebenen Merkmale gelöst.

Das erfindungsgemäße Abdeckelement verdeckt bei gelöster Handbremse den Schlitz sowie den Handbremshebel bis zu dessen Griff praktisch vollständig, so daß einerseits kein Schmutz in den Schlitz eindringen kann und andererseits der Handbremshebel bis zu seinem Griff unsichtbar ist, wobei durch die Wahl gleicher Bezugstoffe für das Abdeckelement und für die Konsole das Abdeckelement kaum ins Auge fällt. Da das Abdeckelement im Gegensatz zu der vorher erwähnten Bürste keinerlei Reibung beim Verschwenken des Handbremshebels unterworfen ist, da es mit diesem mitschwenkt, tritt auch kein Verschleiß auf, so daß das Abdeckelement über die ganze Lebensdauer des Fahrzeuges unverändert bleibt. Die Herstellung des vorzugsweise aus Kunststoff bestehenden Abdeckelements kann im Spritzguß und daher sehr kostengünstig erfolgen.

Wenn das Abdeckelement an seinem rückwärtigen Ende lediglich drehbar gelagert ist, so entfernt sich sein vorderes Ende vom Handgriff des Handbremshebels beim Lösen der Handbremse aufgrund der unterschiedlichen Lage der Drehzapfen des Handbremshebels und des Abdeckelements. Dies kann vermieden werden, wenn das Abdeckelement nahe seines vorderen Endes schwenkbar mit dem Handbremshebel verbunden ist, während seine Lagerung am rückwärtigen Ende einen Kulissenschlitz und einen in diesen eingreifenden Drehzapfen aufweist. Dieser Kulissenschlitz ist vorzugsweise so ausgebildet, daß er eine Führung des rückwärtigen Endes des Abdeckelements in im wesentlichen konstantem Abstand von der Endkante des Schlitzes beim Verschwenken des Handbremshebels bewirkt.

Diese schwenkbare Verbindung des Abdeckelements mit dem Handbremshebel erfolgt vorzugsweise mittels eines Filmscharniers, das zwischen dem vorderen Ende des Steges des U-förmigen Abdeckelements und einem sich zwischen dem Handbremshebel und dem auf diesen aufgeschobenen Handgriff erstreckenden Fortsatz angeordnet ist. Wenn gleichzeitig die vorderen Enden der Schenkel des Abdeckelements so ausgebildet sind, daß sie in jeder Stellung des Handbremshebels innerhalb des Handgriffes liegen, so wird vermieden, daß sich irgend ein Spalt zwischen Abdeckelement und Handgriff bilden kann, durch den der Handbremshebel sichtbar ist, der verschmutzen könnte und in dem sich Teile, beispielsweise von Kleidungsstücken, einklemmen könnten, wenn die angezogene Handbremse gelöst wird.

Ein Ausführungsbeispiel der Erfindung wird im folgenden unter Bezugnahme auf die Zeichnungen beschrieben. Es zeigt:

Fig. 1 eine Seitenansicht eines Handbremshebels mit einem Abdeckelement und den angrenzenden Teilen einer Konsole,

Fig. 2 eine Draufsicht der Ausführung von Fig. 1,

Fig. 3 einen Schnitt entlang Linie 3-3 in Fig. 1,

Fig. 4 den Handbremshebel mit Abdeckelement gemäß Fig. 1 in angezogenem Zustand,

Fig. 5 einen Schnitt entlang Linie 5-5 in Fig. 4,

Fig. 6 einen Längsschnitt eines Teiles des vorderen Endes des Handbremshebels mit dem Handgriff und dem vorderen Ende der Abdeckung, das mit dem Handbremshebel durch ein Filmscharnier schwenkbar verbunden ist, und

Fig. 7 einen Schnitt entlang Linie 7-7 in Fig. 6.

In den Zeichnungen ist mit 1 eine zwischen den Vordersitzen eines Kraftfahrzeuges angebrachte Konsole bezeichnet, die einen Schlitz 2 zur Aufnahme eines Handbremshebels 3 aufweist, der um einen unterhalb der Konsolenoberfläche 4 angebrachten Drehpunkt 5 schwenkbar ist. Der Handbremshebel 3 hat an seinem vorderen Ende einen Griff 6 und an seinem hinteren Ende einen abgewinkelten Fortsatz 7 mit einem Auge 8, an dem das Bremsgestänge angreift. Ein Druckknopf 9 im Griff 6 dient zum Lösen einer nicht dargestellten Sperre.

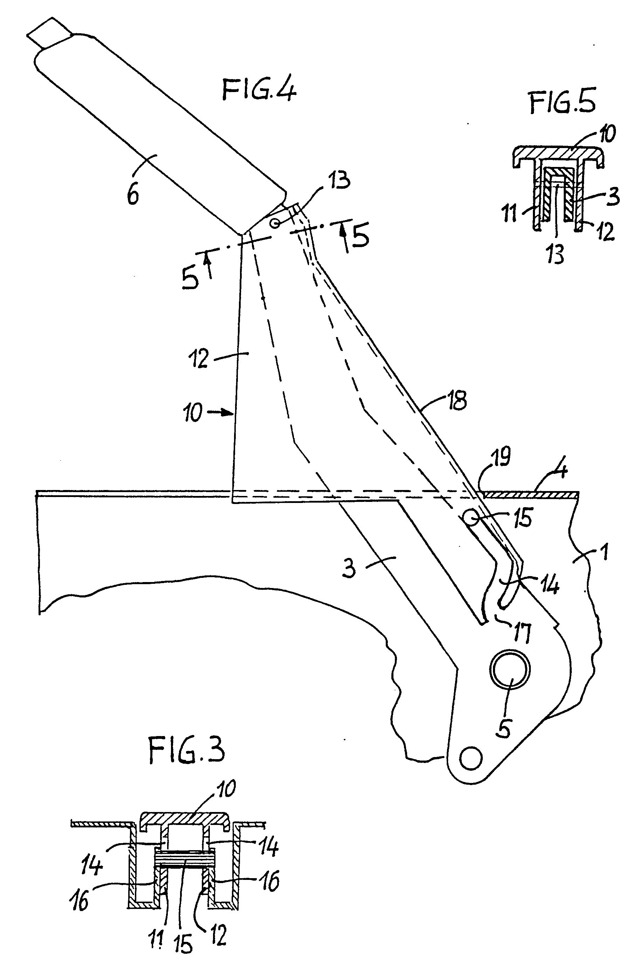

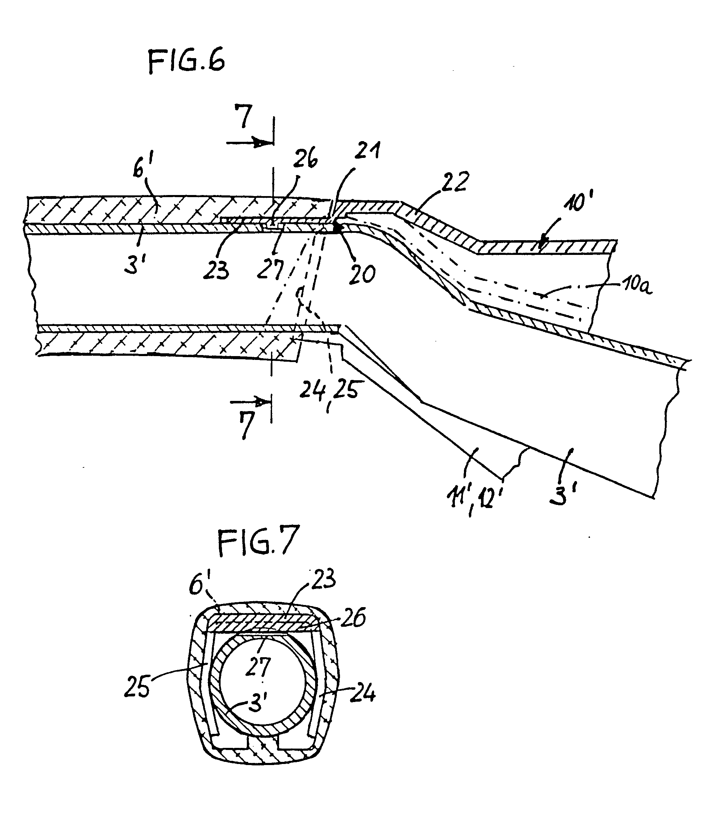

Zur Abdeckung des Schlitzes 2 und des Handhebels 3 ist ein Abdeckelement 10 vorgesehen, das sich über die Länge des Schlitzes 2 erstreckt und einen U-förmigen Querschnitt zur Aufnahme des Handbremshebels 3 aufweist, wie dies insbesondere aus Fig. 5 ersichtlich ist. Die Schenkel 11 und 12 des Abdeckelements 10 haben eine solche Form und Abmessung, daß sie sich auch bei angezogener Handbremse gemäß Fig. 4 noch in den Schlitz 2 der Konsole 1 erstrecken. Das Abdeckelement 10 ist nahe seines vorderen Endes durch einen Drehzapfen 13 schwenkbar mit dem Handbremshebel 3 verbunden und an seinem rückwärtigen Ende mit einem Kulissenschlitz 14 in jedem Schenkel 11, 12 versehen, in den ein Stift 15 eingreift, der in von der Konsolenoberfläche 4 nach unten sich erstreckenden Ansätzen 16 der Konsole 1 gelagert ist. Die Kulissenschlitze 14 haben ein offenes rückwärtiges Ende 17, so daß der Drehzapfen 15 in die Schlitze 14 eingefädelt werden kann. Dann wird das Abdeckelement 10 mittels des Stiftes 13 am Handbremshebel 3 fixiert.

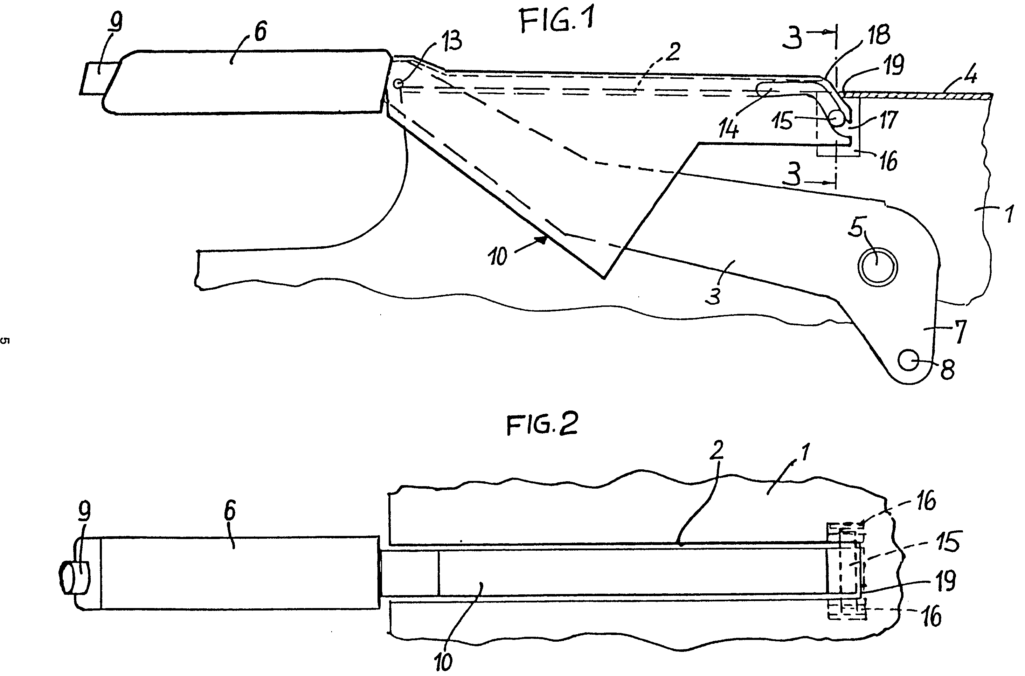

Die Kulissenschlitze 14 haben eine solche Form, dass die Oberseite 18 des Abdeckelements 10 in jeder Stellung des Handbremshebels 3 im wesentlichen den gleichen Abstand von der Endkante 19 des Schlitzes 2 hat, wie ein Vergleich der Fig. 1 und 4 deutlich zeigt. Dieser Abstand kann sehr klein gehalten werden, so daß die Verschmutzungsgefahr gering ist und der ästhetische Eindruck verbessert ist.

Bei der Verbindung des vorderen Endes des Abdeckelements 10 mit dem Handbremshebel 3 durch den Stift 13 entsteht, wie aus Fig. 4 ersichtlich ist, bei angezogener Handbremse ein Spalt zwischen dem vorderen Ende des Abdeckelements 10 und dem rückwärtigen Ende des Handgriffs 6. Durch diesen Spalt ist der Handbremshebel 3 sichtbar, was ästhetisch unbefriedigend ist. Außerdem kann sich in diesem Spalt Schmutz ansammeln und schließlich können sich Teile von Kleidungsstücken, beispielsweise der Ärmel, in diesem Spalt einklemmen, wenn die Handbremse gelöst wird. Um diesen Nachteil zu vermeiden, ist bei der Ausführung gemäß Fig. 6 und 7 die schwenkbare Verbindung zwischen dem Abdeckelement 10' und dem Handbremshebel 3' durch ein Filmscharnier 20 gebildet, das zwischen dem vorderen Ende 21 des Steges 22 des Abdeckelements 10' und einem Fortsatz 23 angeordnet ist, der sich zwischen den Handbremshebel 3' und den auf diesen aufgeschobenen Handgriff 6' erstreckt. Außerdem sind die vorderen Enden 24, 25 des Schenkels 11', 12' des Abdeckelements 10' so ausgebildet, daß sie in jeder Stellung des Handbremshebels innerhalb des Handgriffes 6' liegen. Auf diese Weise wird erreicht, daß in keiner Stellung des Handbremshebels ein Spalt zwischen dem Abdeckelement 10' und dem Handgriff 6' entsteht, durch der der Handbremshebel 3' sichtbar ist. In Fig. 6 ist die Lage des Abdeckelements 10' zum Handbremshebel 3' in ausgezogenen Linien bei gelöster Handbremse und in strichpunktierten Linien bei 10a bei angezogener Handbremse dargestellt.

Der Fortsatz 23 weist an seiner Unterseite einen Quersteg 26 auf, der in eine Quernut 27 in der Oberseite des Handbremshebels 3 eingreift, so daß nach dem Aufschieben des Handgriffes 6 eine unlösbare Verbindung zwischen dem Abdeckelement 10' und dem Handbremshebel 3' geschaffen ist.

**Patentansprüche**

1. Abdeckelement für den schwenkbaren Handbremshebel eines Kraftfahrzeuges, der sich durch einen Schlitz in einer am Fahrzeugboden angebrachten Konsole erstreckt und auf einem unterhalb oder hinter der Konsolenoberfläche angeordneten Drehzapfen gelagert ist, dadurch gekennzeichnet, daß das Abdeckelement (10) sich über die Länge des Schlitzes (2) erstreckt und einen U-förmigen Querschnitt zur Aufnahme des Handbremshebels (3) aufweist, daß seine Schenkel (11, 12) eine solche Form und Abmessung haben, daß sie sich auch bei angezogener Handbremse noch in den Schlitz in der Konsole erstrecken, und daß das Abdeckelement nahe seinem rückwärtigen Ende in der Konsole (1) oberhalb des Drehzapfens (5) des Handbremshebels (3) und nahe der Oberseite der Konsole (4) schwenkbar gelagert ist.

2. Abdeckelement nach Anspruch 1, dadurch gekennzeichnet, daß es nahe seinem vorderen Ende schwenkbar (bei 13) mit dem Handbremshebel (3) verbunden ist, und daß seine Lagerung am rückwärtigen Ende einen Kulissenschlitz (14) und einen in diesen eingreifenden Drehzapfen (15) aufweist.

3. Abdeckelement nach Anspruch 2, dadurch gekennzeichnet, daß in jedem Schenkel (11, 12) ein Kulissenschlitz (14) vorgesehen ist, der von einem beiden Kulissenschlitzen gemeinsamen, in der Konsole gelagerten Drehzapfen (15) durchdrungen ist.

4. Abdeckelement nach Anspruch 2 oder 3, dadurch gekennzeichnet, daß der Kulissenschlitz (14) so ausgebildet ist, daß er eine Führung des Abdeckelements (10) in einem im wesentlichen konstanten Abstand von der Endkante (19) des Schlitzes (2) beim Verschwenken des Handbremshebels (3) bewirkt.

5. Abdeckelement nach Anspruch 2, dadurch gekennzeichnet, daß seine schwenkbare Verbindung mit dem Handbremshebel (3') von einem Folienscharnier (20) zwischen dem vorderen Ende (21) des Steges (22) des Abdeckelements (10') und einem sich zwischen dem Handbremshebel (3') und dem auf diesen aufgeschobenen Handgriff (6) erstreckenden Fortsatz (23) gebildet ist, und daß die vorderen Enden (24, 25) der Schenkel (11', 12') des Abdeckelements (10') so ausgebildet sind, daß sie in jeder Stellung des Handbremshebels innerhalb des Handgriffes (6') liegen.

6. Abdeckelement nach Anspruch 5, dadurch gekennzeichnet, daß der Fortsatz (23) an seiner Unterseite einen Quersteg (26) aufweist, der in eine Quernut (27) in der Oberseite des Handbremshebels (3') eingreift.

**Claims**

1. Cover piece for the pivoting handbrake lever of a motor vehicle, where the handbrake lever extends through a slot in a console mounted on the floor of the vehicle and is pivoted on a pivot pin located below or behind the surface of the console, characterised in that the cover piece (10) extends along the complete length of the slot (2) and is U-shaped in section to accommodate the handbrake lever (3), the sides (11, 12) of the cover piece are of suitable shape and size so that they also extend into the slot in the console when the handbrake is applied, and that the cover piece is pivoted near its rear end in the console (1) above the pivot pin (5) of the handbrake (3) and close to the upper surface of the console (4).

2. Cover piece in accordance with claim 1, characterised in that it is provided with a pivoting connection with the handbrake lever (3) at a point near its front end (position 13), and that it is located at its rear end by means of a guide slot (14) and a pivot pin (15) engaging in this guide slot.

3. Cover piece in accordance with claim 2, characterised in that the sides (11, 12) of the cover piece are each provided with a guide slot (14), so that the guide slots in the two sides of the cover piece engage around the pivot pin (15) mounted in the console.

4. Cover piece in accordance with claims 2 or 3, characterised in that the guide slot (14) is shaped to guide the cover piece (10) so that it maintains a virtually constant distance from the end lip (19) of the slot (2) when the handbrake lever (3) is pivoted.

5. Cover piece in accordance with claim 2, characterised in that its pivoting connection with the handbrake lever (3') is formed by a foil hinge (20) between the front (21) of the end portion (22) of the cover piece (10') and a continuation (23) extending between the handbrake lever (3') and the hand grip (6) fitted over the handbrake lever, and that the front ends (24, 25) of the sides (11', 12') of the cover piece (10') are shaped so that they extend inside the hand grip (6') in all positions of the handbrake lever.

6. Cover piece in accordance with claim 5, characterised in that the continuation (23) is provided with a transverse protrusion (26) on its lower surface, which engages in a transverse recess (27) in the upper surface of the handbrake lever (3').

**Revendications**

1. Elément de recouvrement pour le levier de frein à main basculant d'un vehicule automobile qui passe par une fente aménagée dans une console fixée sur le plancher du véhicule et articulée sur un pivot disposé en dessous ou derrière la surface de la console; le système étant caractérisé par le fait que l'élément de recouvrement (10) s'étend sur la longueur de la fente (2), présente une section en U pour la réception du levier de frein à main (3) de telle sorte que ses branches (11, 12) ont une forme et des dimensions adéquates pour que même lorsque le frein à main est serré ces branches se trouvent encore dans la fente de la console et que l'élément de recouvrement soit fixé de sorte qu'il puisse pivoter près de son extrémité arrière, dans la console (1), au-dessus du pivot (5) du levier de frein à main (3) et près de la face supérieure de la console (4).

2. Elément de recouvrement conformément à la revendication 1, caractérisé par le fait qu'il est assemblé au levier de frein à main (3) près de son extrémité avant et puisse pivoter sur le levier de frein à main (au point 13) et de telle sorte que sa fixation à l'extrémité arrière présente une fente de coulissement (14) et un pivot (15) venant se loger dans cette fente.

3. Elément de recouvrement conformément à la revendication 2, caractérisé par le fait que chaque branche (11, 12) présente une fente de coulissement (14), l'élément de revouvrement étant traversé par un pivot fixé sur la console (15) et passant à la fois dans les deux fentes de coulissement.

4. Elément de recouvrement conformément à la revendication 2 ou 3, caractérisé par le fait que la fente de coulissement (14) est formée de telle sorte qu'elle assure un guidage de l'élément de recouvrement (10) à une distance sensiblement constante de l'extrémité (19) de la fente (2) au basculement du levier de frein à main (3).

5. Elément de recouvrement conformément à la revendication 2, caractérisé par le fait que son assemblage pivotant avec le levier de frein à main (3') est réalisé par une charnière constituée d'une feuille (20) entre l'extrémité avant (21) de la traverse (22) de l'élément de recouvrement (10') et un prolongement (23) allant du levier de frein à main (3') jusqu'à la poignée (6) glissée sur ce levier, et par le fait que les extrémités avant (24, 25) des branches (11', 12') de l'élément de recouvrement (10') sont formées de telle sorte que dans n'importe quelle position du levier de frein à main elles se trouvent toujours à l'intérieur de la poignée (6').

6. Elément de recouvrement conformément à la revendication 5, caractérisé par le fait que le prolongement (23) présente sur sa face inférieure une traverse (26) qui vient en prise dans une rainure transversale (27) aménagée dans la face supérieure du levier de frein à main (3').

FIG.1

FIG.2

EP 0 212 664 B1

FIG.4

FIG.5

FIG.3

# FIG.6

# FIG.7

9